# EUROPÄISCHE PATENTSCHRIFT

(11) **EP 0 259 847 B1**
(45) Veröffentlichungstag und Bekanntmachung des Hinweises auf die Patenterteilung: **31.03.1993**
(21) Anmeldenummer: 87113145.4
(22) Anmeldetag: 09.09.1987
(51) Int. Cl.: B23B 27/04

(54) **Werkzeug zur spanabhebenden Metallbearbeitung wie Anfasen, Stechen, Plandrehen und Fräsen**
Cutting tool for chip-producing metal working such as cutting off, chamfering, planing and milling
Outil de coupe pour l'usinage de métal par enlèvement de copeaux comme le tronçonnage, le chanfreinage, le planage et le fraisage

(30) Priorität: 10.09.1986 DE 3630845; 15.10.1986 DE 3635052
(43) Veröffentlichungstag der Anmeldung: 16.03.1988
(73) Patentinhaber: ISCAR LTD., Nahariya (IL)
(72) Erfinder: Pano, Jose, IL-25227 Shave/Zion (IL)
(74) Vertreter: Behrens, Dieter, Dr.-Ing.

(56) Entgegenhaltungen:
- EP-C- 0 152 729
- DE-A- 3 420 653
- GB-A- 2 082 485

## Beschreibung

Die Erfindung betrifft ein Werkzeug nach dem Anspruch 1 und einen Schneideinsatz nach dem Anspruch 6, siehe EP-A-0 095 062.

Für die spanabhebende Metallbearbeitung, wie das Stechen, sind derartige Werkzeuge durch Prospekte der Fa. Valenite -M-LC-101 bekannt. Ferner sind Werkzeuge zum Bearbeiten des Stirnrandes von Rohren bekannt, die sowohl eine Innenfase als auch eine Außenfase an der Rohrstirnwand erstellen. Ein solches Werkzeug ist durch die US-PS 3 563 119 bekannt, das außer den Anfasschneidkanten noch ein Abstechwerkzeug aufweist. Die genannte Druckschrift jedoch offenbart nur eine herkömmliche Stechklinge mit aufgesetztem Anfasmesser, das an jeder Seite zwei V-förmig gegeneinander gestellte Schneidkanten besitzt. Sie beschreibt keinen Schneidenträger mit auswechselbarem Hartmetall-Schneideinsatz, der in seiner Lage genau festgelegt und gegen Zug und Druck gesichert ist, um die gewünschten Schnittiefen bzw. die Seite 5 die gewünschte Lage und Ausbildung der Fasen exakt einhalten zu können.

Die DE-OS 30 44 790 beschreibt einen Scheibenfräser, dessen Schneideinsätze auf der Anlagefläche mit einer Vertiefung versehen sind, in die eine federnde Zunge oder ein federnder Ansatz der benachbarten Sitzbacke des Schneidenträgers eingreift. Ein solcher Schneideinsatz wird gegen leichtere Zentrifugalkräfte durch die federnde Zunge des Schneidenträgers gesichert; eine Sicherung in Längsrichtung bei stärkerer Beanspruchung des Schneideinsatzes auf Zug ist hierdurch nicht gegeben, wie sie beim Schneiden einer Innenfase an der Rohrstirnwand, bei höheren Drehzahlen des Fräsers oder beim Plandrehen auftreten. Die DE-OS 33 12 693 schlägt als Sicherungselement Ringe vor, die im Ende der Aufnahmetasche verankert sind und in eine Rastnut am Ende des Schneideinsatzes eingreifen. Das hat sich wegen der komplizierten Handhabung nicht bewährt.

Das Schneidwerkzeug gemäß EP-A-0 095 062 besitzt auf der Anlageflache der unteren Sitzbacke eine quer über die Anlagefläche verlaufende bogenförmige Erhebung und in der gegenüberliegenden unteren Anlagefläche des Schneideinsatzes eine Ausnehmung in welche die Erhebung eingreift. Das dient lediglich als Auszugssicherung gegen relativ schwere Auszugskräfte. Die Erhebung soll bei einer Verlust der Klemmspannung bzw. bei dem Auftreten zu großer auf den Schneideinsatz ziehend einwirkender Kräfte, insbesondere Zentrifugalkräfte bei rotierenden Werkzeugen verhindern, daß der Schneideinsatz herausgeschleudert werden kann. Schon aufgrund ihrer Lage in der Aufnahmetasche ist die Erhebung nicht geeignet, als Sicherung gegen starke Auszugskräfte zu dienen. Erst recht kann die Erhebung keine Schnittkräfte abtragen; dazu dient ein besonderer Einschubbegrenzungsanschlag. Ebensowenig kann die Erhebung seitlich auf den Schneideinsatz einwirkende Schnittkräfte abtragen die beispielsweise beim Fasen oder Längsdrehen entstehen.

In EP 0 152 729 A3 ist ein Schneidwerkzeughalter beschrieben, der in einer Aufnahmetasche einen Schneideinsatz selbstklemmend aufnimmt, weil die Formgebung von Tasche und Einsatz derart sind, daß das elastische Öffnen der Tasche beim Einschieben des Einsatzes zunächst stark und danach weniger stark erfolgt, bis eine bogenartige Erhebung des Einsatzes im vorderen Bereich der prismatischen Anlagefläche hinter der Schneidkante an eine stirnseitige Schrägfläche des Schneidenträgers zur flächigen Anlage kommt. Der Querschnitt der prismatischen Anlagefläche der oberen Sitzbacke und der oberen prismatischen Anlagefläche des Schneideinsatzes sind über die Erhebung bzw. die Ausnehmung hinweggeführt. Diese Konstruktion erlaubt kein befriedigendes Abtragen vornehmlich in Längsrichtung wirkender stärkerer Ausziehkräfte und seitwärts gerichtete Schnittkräfte, wie sie beim Plandrehen und beim Schneiden einer Innenfase an einer Rohrstirnwand auftreten.

Diesem Stand der Technik gegenüber besteht die Aufgabe der Erfindung darin, ein Werkzeug insbesondere zum Anfasen, Stechen, Plandrehen und Fräsen zu schaffen, bei dem mit Hilfe konstruktiv einfacher Mittel die Position des Schneideinsatzes im Schneidenträger exakt festlegbar ist und gegen Zug- und Druckkräfte in seiner Längsrichtung ebenso wie gegen seitlich einwirkende Kräfte gesichert ist, wobei die Schnittkräfte optimal vom Schneideinsatz in die Sitzbacken des Schneidenträgers abgeleitet werden sollen. Das Einsetzen und Entfernen des Schneideinsatzes aus dem Schneidenträger soll hierbei arbeitssparend erfolgen können.

Ein Werkzeug, das diese Aufgabe löst, und ein Schneideinsatz für die Verwendung in solchen Schneidwerkzeugen sind mit Ausgestaltungen in den Patentansprüchen gekennzeichnet.

Die Erhebung der unteren Anlagefläche und die komplementäre Ausnehmung des Scheideinsatzes bilden im Gegensatz zu der durch die DE-OS 30 44 790 bekannten Federzunge oder dem federnden Ring gemäß DE-OS 33 13 693 einen starren Anschlag und im Gegensatz zu dem durch EP 95 062 A1 und EP 152 729 A3 bekannten Erhebung bzw. Ausnehmung ein komplementäres Paar von Erhebung und Ausnehmung der Anlageflächen, so daß vollständiger Formschluß in beiden Richtungen der Längs- und Querachse gegeben und eine wirkungsvolle Sicherung in beiden Richtungen erzielt ist. Die Lage der Ausnehmung und der Erhebung im Vorderbereich der Anlageflächen ist optimal sowohl für die Verspannung durch die federnd schwenkbewegliche Sitzbacke als auch zum Abtragen der Schnittkräfte aus dem Schneideinsatz. Durch die Verlängerung der Anlagefläche vor der bogenähnlichen Ausnehmung und der entsprechenden Erhebung des Schneidenträgers wird bereits beim Einschieben des Schneideinsatzes in seinen Sitz ein starrer Anschlag gebildet, der eine genaue Stellung des Schneideinsatzes gegenüber dem Schneidenträger gewährleistet und das Abtragen der Schnittkräfte weiter verbessert, insbesondere wenn die Anlageflächen in diesem Bereich etwa senkrecht zu den resultierenden Schnittkräften angestellt sind. Die Fortführung des Querschnittes der prismatischen Anlageflächen über die bogenförmige Ausnehmung bzw. Erhebung hinweg in den nach unten verlängerten vorderen Bereich der unteren Anlageflächen gibt dem Schneideinsatz besondere Stabilität gegen seitliche Abdrängkräfte beim Schneiden.

Auf der Zeichnung ist ein Ausführungsbeispiel des erfindungsgemäßen Werkzeuges dargestellt und zwar zeigt
Figur 1 den Schneidenträger in Seitenansicht mit eingesetztem Schneideinsatz.
Figur 2 den Schneidenträger mit Schneideinsatz in Draufsicht auf die Oberkante.
Figur 3 einen Querschnitt durch den Schneideinsatz
Figur 4 das Einsetzen des Schneideinsatzes in die Aufnahmetasche des Schneidenträgers.
Figur 5 den eingesetzten Schneideinsatz, bevor die schwenkbewegliche Backe gegen den Schneideinsatz gespannt wird und.
Figur 6 in vergrößertem Maßstab gegenüber den Figuren 1 bis 5 die erfindungsgemäße Ausbildung der Erhebung der vorderen unteren Anlagefläche und der Ausnehmung des Schneideinsatzes des Schneidenträgers.

Der Schneidenträger 1, auch Schwert genannt, weist flachen, rechteckigen Querschnitt mit der oberen Kante 2, der unteren Kante 3 und der zu dieser Kante rechtwinklig verlaufenden Stirnkante 4 auf. Von der Stirnkante 4 ausgehend ist die Aufnahmetasche 6 für den Schneideinsatz S in den Schneidenträger eingearbeitet. Oberhalb der Aufnahmetasche 6 ist der Schneidenträger zur Verbesserung des Spanflusses abgeschrägt.

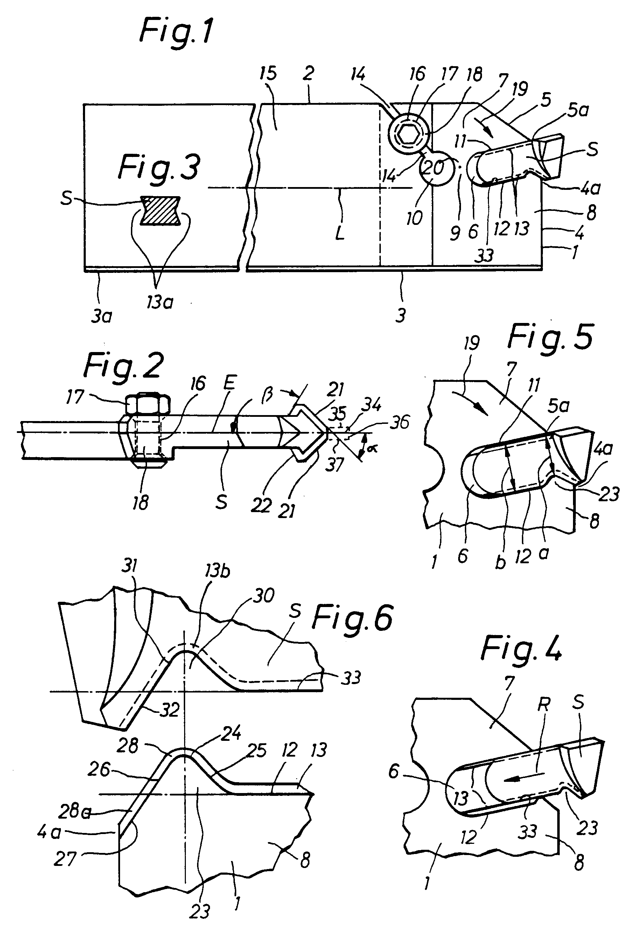

Die Aufnahmetasche 6 wird begrenzt von der oberen Sitzbacke 7 mit der oberen prismatischen Anlagefläche 11 und der unteren Sitzbacke 8 mit der unteren prismatischen Anlagefläche 12, die sich parallel oder annähernd parallel gegenüberliegen. Der Schneideinsatz S ist in bekannter Weise mit ensprechenden Anlageflächen 13a versehen (Figur 3), um ihm in dem Sitz 6 den notwendigen seitlichen Halt zu verleihen.

Ausgehend von der Querbohrung 10 durch den Schneidenträger erstreckt sich unter einem Winkel von etwa 45° zur Halterlängsachse L ein Schlitz 14, durch den die Backe 7 von dem übrigen Schneidenträger 5 getrennt und nur über den schmalen Steg 9 zwischen der Aufnahmetasche und der Bohrung 10 mit dem Schneidenträger verbunden ist. Der Schlitz 14 wird durch eine Bohrung 16 unterbrochen, in die ein Keilelement 17 (Exzenter, Konus und dgl.) hinreinragt, das mittels der Schraube 18 derart verstellt werden kann, daß die Backe 7 in Richtung des Pfeiles 19 drehbeweglich um die Mitte 20 Steges 9 gegen den Schneideinsatz S verstellt werden kann, wodurch dieser in seinem Sitz 6 festgeklemmt wird.

Der Schneideinsatz S besitzt ein Paar Schneidkanten 21, die unter einem Winkel δ von 45° gegen die Längsmittelebene E des Schneidenträgers 1 angestellt sein können und für das Außenfasen vorgesehen sind. Winkelig zum Kantenpaar 21 sind die Schneidkanten 22 an dem Kopf des Schneideinsatzes S angeordnet, die dem Innenfasen dienen und unter einem Winkel β von 120° gegen die Ebene E verlaufen.

Die Anlagefläche 12 der unteren Sitzbacke 8 weist im vorderen Bereich nahe der Öffnung des Sitzes 6 eine bogenähnliche Erhebung 23 auf. Diese ist symmetrisch oder annähernd symmetrisch ausgebildet und weist einer bogenförmigen Abschnitt 24 und zwei sich daran anschließende gerade oder etwa gerade Abschnitte 25, 26 auf. Der Abschnitt 26 geht in eine Verlängerung 27 über, die die gleiche Schrägstellung aufweist wie der Abschnitt 26 und etwa senkrecht zu den resultierenden Schnittkräften beim Außenfasen ausgerichtet ist. Der Querschnitt der prismatischen Anlagefläche 12, wie er bei 13 in Figur 1 erkennbar ist, setzt sich bei 28 an der bogenähnlichen Erhebung 23 fort und kann bis in die Verlängerung 27 und 28a geführt sein.

Der Schneideinsatz S weist eine der bogenähnlichen Erhebung 23 entsprechende Ausnehmung 30 auf, deren vordere Anlagefläche 31 ebenfalls eine Verlängerung 32 aufweist, die gegen den Abschnitt 26, 27 der Erhebung 23 anliegt. Der Querschnitt der prismatischen unteren Anlagefläche 33 ist ebenso wie bei der Anlagefläche des Schneidenträgers über die Ausnehmung 30 hinweg -bei 13b- bis in die schräge Verlängerung 32 der Anlagefläche hineingeführt.

Die Ausbildung des Schneideinsatzes 1 und seines Sitzes 6 ist so getroffen, daß der Abstand zwischen der Kante 5a und der Erhebung 23 bei ungespannter Backe 7 gleich oder größer als die Höhe b des Schneideinsatzes ist (Figur 5), so daß der Schneideinsatz in der genannten Lage der Backe 7, wie dies Figur 4 verdeutlicht, in Längsrichtung (Pfeil R) in den Sitz 6 geschoben werden kann. Die Verlängerung 32 der Ausnehmung 30 des Schneideinsatzes findet Anlage an dem Abschnitt 26 der Erhebung 23, wodurch die Lage des Schneideinsatzes S gegenüber dem Schneidenträger bestimmt und der Schneideinsatz durch Schwenken der Backe 7 in Richtung des Pfeils 19 zwischen den Anlageflächen 11, 12 festgeklemmt wird. Figur 5 verdeutlicht, daß bei ungespanntem Zustand die Backe 7 mit ihrer Anlagefläche noch einen geringen Abstand von der benachbarten Anlagefläche des Schneideinsatzes aufweist.

Aus Vorstehendem ist erkannbar, daß die Erhebung 23 und die Ausnehmung 30 einen starren Anschlag für den Schneideinsatz sowhl in Zug- als auch in Druckrichtung in der Längsachse des Schneideinsatzes bilden, wobei die dem Anschlag abgewandte, schwenkbewegliche Backe 7 für ein Andrücken des Schneideinsatzes gegen die starre Erhebung 23 sorgt. Trotz der starren Erhebung 23 und der Ausnehmung 30 läßt sich der Schneideinsatz S ohne Schwierigkeiten in den Sitz 6 einschieben.

In gleicher Weise wie bei dem beschriebenen Faswerkzeug läßt sich die Erfindung auch bei anderen Werkzeugen verwenden, bei denen ein Schneideinsatz auf einem schmalen Schneidenträger befestigt ist, exakt positioniert werden muß und auch gegen zeitweilige Zugkräfte gesichert werden muß. Diese Verhältnisse können beim Stechen, bei Scheibenfräsern und beim Plandrehen auftreten.

Zum Stechen und Fasen kann der Schneideinsatz S zusätzlich zu den Kantenpaaren 21, 22 einen zentrischen Vorsprung 34 als Vorstecher aufweisen, der die Stechkanten 35, 36 und 37 aufweist. Ein solcher Vorstecher ist in Figur 2 in gestrichelter Linie dargestellt.

## Patentansprüche

1. Werkzeug für spanabhebende Metallbearbeitung, insbes. Anfasen, Stechen, Plandrehen und Fräsen, bestehend aus einem schmalen Schneidenträger und auswechselbaren HartmetallSchneideinsätzen mit folgenden Merkmalen:
a. der Schneidenträger (1) hat eine Aufnahmetaschen (6) für die Schneideinsätze (S) mit oberen und unteren Sitzbacken (7, 8) mit annähernd parallelen prismatischen oberen und unteren Anlageflächen (11, 12) für den Schneideinsatz (S), der diesen Anlageflächen (11, 12) gegenüberliegende komplementäre Anlageflächen (33) aufweist;
b. durch eine Schlitz (14) im Schneidenträger (1) bis nahe an den hinteren Abschluß der Aufnahmetasche (6) ist eine Sitzbacke (7) über einen schmalen Steg (9) federnd schwenkbeweglich;
c. die federnd schwenkbewegliche Sitzbacke (7) ist gegen den Schneideinsatz (S) anpreßbar;
d. die Anlagefläche (12) der unteren Sitzbacke (8) hat eine quer über die Anlagefläche reichende, in Längsrichtung bogenähnliche Erhebung (23) und der Schneideinsatz (S) hat in der unteren Anlagefläche (33) eine der Erhebung (23) gegenüberliegende komplementäre Ausnehmung (30);
**gekennzeichnet** durch
e. die bogenähnliche Erhebung (23) ist in Längsrichtung symmetrisch oder annähernd symmetrisch ausgebildet, und weist einen bogenförmigen mittleren Abschnitt (24) sowie zwei sich daran anschließende gerade oder etwa gerade Abschnitte (25, 26) auf und befindet sich im vorderen Bereich nahe der Öffnung der Aufnahmetasche (6) in der unteren Sitzbacke (8), und die Ausnehmung (30) des Schneideinsatzes (S) weist eine der Erhebung (23) entsprechende komplementäre Form auf und befindet sich im vorderen Bereich des Schneideinsatzes,
f. der Querschnitt der prismatischen Anlagefläche der unteren Sitzbacke (8) und der prismatischen Anlagefläche (33) des Schneideinsatzes (S) sind über die Erhebung (23) bzw. die Ausnehmung (30) hinweggeführt, und
g. im Schlitz (14) des Schneideinsatzes (S) ist ein Keilelement (17, 18) verstellbar derart gehalten, daß die obere Sitzbacke (7) zur leichten Einführung des Schneideinsatzes in die Aufnahmetasche (6) von der unteren Sitzbacke (8) wegschwenkbar und nach Einführen des Schneideinsatzes gegen diesen in eine Klemmstellung verstellbar ist, in der die Erhebung (23) in die Ausnehmung (30) vollständig eingreift.

2. Werkzeug nach Anspruch 1,
dadurch **gekennzeichnet,**
daß die untere Anlagefläche (12) der Sitzbacke (8) auf der Vorderseite der Erhebung (23) über die Fluchtlinie der prismatischen unteren Anlagefläche (12) hinaus verlängert ist (27) und die untere Anlagefläche (33) des Schneideinsatzes (S) im vorderen Bereich der Ausnehmung (30) entsprechend nach unten verlängert ist (32).

3. Werkzeug nach Anspruch 1 und 2,
dadurch **gekennzeichnet,**
daß die Anlagefläche (27) vor der Erhebung (23) und die Anlagefläche (32) vor der Ausnehmung (30) in grade Schrägflächen auslaufen.

4. Werkzeug nach Anspruch 3,
dadurch **gekennzeichnet,**
daß die Schrägflächen (27, 32) etwa senkrecht zur resultierenden Schnittkraft ausgerichtet sind.

5. Werkzeug nach einem der Ansprüche 1 bis 4,
dadurch **gekennzeichnet,**
daß bei geöffneter schwenkbeweglicher Sitzbacke (7) der Abstand (a) zwischen der Spitze der Erhebung (23) der unteren Anlagefläche (12) und er oberen Anlagefläche (11) auf der Aufnahmetasche (6) gleich oder größer als die Höhe (b) des Schneideinsatzes (S) ist.

6. Schneideinsatz ausschließlich für die Verwendung in Schneidwerkzeugen nach einem der Ansprüche 1 bis 5 mit annähernd parallelen prismatischen oberen und unteren Anlageflächen (33) zur Befestigung in der Aufnahmetasche (6) eines Schneidenträgers (1) und mit einer quer, über die Anlagefläche reichenden, in Längsrichtung bogenähnlichen Ausnehmung (30) im vorderen Bereich der unteren Anlagefläche (33) für den Eingriff in eine angepaßte Erhebung (23) in der unteren Anlagefläche (12) der Aufnahmetasche des Schneidenträgers,
**gekennzeichnet** durch
a. die bogenähnliche Ausnehmung (30) des Schneideinsatzes (S) ist in Längsrichtung symmetrisch oder annähernd symmetrisch komplementär zur bogenähnlichen Erhebung (23) der Aufnahmetasche ausgebildet und weist einen bogenförmigen mittleren Abschnitt sowie zwei sich daran anschließende gerade oder etwa gerade, dachförmig zueinanderstehende Flanken für die Anlage an den beiden Flanken (25, 26) des mittleren Abschnitts (24) der Erhebung (23) auf, und
b. der Querschnitt der unteren prismatischen Anlagefläche (33) ist über die Ausnehmung (30) hinweggeführt.

7. Schneideinsatz nach Anspruch 6,
dadurch **gekennzeichnet,**
daß die untere Anlagefläche (32) vor der Ausnehmung (30) über die Fluchtlinie der unteren prismatischen Anlagefläche (33) nach unten verlängert ist.

8. Schneideinsatz nach einem der Ansprüche 6 und 7,
dadurch **gekennzeichnet,**
daß die verlängerte untere Anlagefläche (32) vor der Ausnehmung (30) in eine gerade Schrägfläche ausläuft.

9. Schneideinsatz nach Anspruch 8,
dadurch **gekennzeichnet,**
daß die Schrägfläche (32) etwa senkrecht zur resultierenden Schnittkraft angestellt ist.

10. Schneideinsatz nach Anspruch 6 für das Anbringen einer inneren oder äußeren Fase an den Stirnkanten von Rohren,
dadurch **gekennzeichnet,**
daß dieser am vorderen Ende ein im Winkel angestelltes vorderes Schneidkantenpaar (21) und ein im Winkel angestelltes hinteres Schneidkantenpaar (22) zum Innen- und Außenfasen aufweist, jeweils symmetrisch bezüglich der Längsmittelebene (E) angeordnet sind und einen spitzen Winkel bilden, und daß die beiden Schneidkantenpaare (21, 22) zur Längsmittelebene von der Spitze ausgehend hinterschnitten sind.

## Claims

1. Tool for chip removing machining of metals, particularly for chamfering, recessing, facing and milling, consisting of a narrow cutter carrier and of replaceable carbide cutting inserts having the following features:
a) the cutter carrier (1) has a holding pocket (6) for the cutting inserts (S), said pocket comprising upper and lower seat jaws (7, 8) having substantially parallel prismatic upper and lower bearing faces (11, 12) for the cutting insert (S) which includes complementary bearing faces (33) opposite to the bearing faces (11,12);
b) one of said seat jaws (7) is resiliently pivotably moveable about a narrow land (9) by means of a slot (14) extending in the cutter carrier (1) until close to the rear end of the holding pocket (6);
c) the resiliently pivotably moveable seat jaw (7) is capable of being urged against the cutting insert (S);
d) the bearing face (12) of the lower seat jaw (8) includes a ridge (23) which extends transversely across the bearing face and is of arc-like shape in the longitudinal direction, and the cutting insert (S) has a complementary recess (30), opposite to the ridge (23), in the lower bearing face (33);
**characterized** by
e) the ridge (23) of arc-like shape is of a longitudinally symmetric or substantially symmetric configuration and has an arcuate middle section (24) as well as two straight or substantially straight sections (25, 26) adjacent thereto, and is arranged in the front region close to the mouth of the holding pocket (6) in the lower seat jaw (8), and the recess (30) of the cutting insert (S) is of a complementary form corresponding to the ridge (23) and is arranged in the front region of the cutting insert,
f) the cross-section of the prismatic bearing face of the lower seat jaw (8) and of the prismatic bearing face (33) of the cutting insert (S) are continued to extend respectively beyond the ridge (23) and the recess (30), and
g) within the slot (14) of the cutting insert (S), a wedge element (17, 18) is adjustably retained in such a way that the upper seat jaw (7) is capable of being pivoted away from the lower seat jaw (8) in order to facilitate the insertion of the cutting insert into the holding pocket (6) and of being adjusted towards the cutting insert, after the insertion thereof, into a clamping position in which the ridge (23) is entirely engaged into the recess (30).

2. Tool according to claim 1,
**characterized** in that
on the front side of the ridge (23), the lower bearing face (12) of the seat jaw (8) is projected (27) beyond the extension of the prismatic lower bearing face (12), and the lower bearing face (33) of the cutting insert (S) projects correspondingly downward (32) in the front region of the recess (30).

3. Tool according to claim 1 and 2,
**characterized** in that
the bearing face (27) in front of the ridge (23) and the bearing face (32) in front of the recess (30) terminate in straight sloping faces.

4. Tool according to claim 3,
**characterized** in that
the sloping faces (27, 32) are substantially normally disposed in respect of the resultant cutting force.

5. Tool according to any of claims 1 to 4,
**characterized** in that
in the open position of the pivotably moveable seat jaw (7) the distance (a) between the apex of the ridge (23) of the lower bearing face (12) and the upper bearing face (11) on the holding pocket (6) is equal to or greater than the height (b) of the cutting insert (S).

6. Cutting insert to be exclusively used in cutting tools according to any of claims 1 to 5, comprising substantially parallel, prismatic upper and lower bearing faces (33) for securing in the holding pocket (6) of a cutter carrier (1) and a transversely oriented, longitudinally arc-like recess (30) extending across the bearing face in the front region of the lower bearing face (33) intended for engagement in a matching ridge (23) in the lower bearing face (12) of the holding pocket of the cutter carrier,
**characterized** in that
a) the arc-like recess (30) of the cutting insert (S) is longitudinally symmetrically or substantially symmetrically complementary to the arc-like ridge (23) of the holding pocket and includes an arcuate middle section as well as two straight or substantially straight flanks, adjacent thereto and oppositely arranged in a roof-like configuration, intended to engage with the two flanks (25, 26) of the middle section (24) of the ridge (23), and
b) the cross-section of the lower prismatic bearing face (33) continues to extend beyond the recess (30).

7. Cutting insert according to claim 6,
**characterized** in that
on the front side of the recess (30), the lower bearing face (32) projects downward beyond the extension of the lower prismatic bearing face (33).

8. Cutting insert according to any of claims 6 and 7,
**characterized** in that
the extended lower bearing face (32) terminates in front of the recess (30) in a straight sloping face.

9. Cutting insert according to claim 8,
**characterized** in that
the sloping face (32) is substantially normally disposed in respect of the resultant cutting force.

10. Cutting insert according to claim 6 for carrying out an inner or outer chamfer on the end edges of tubes,
**characterized** in that
the insert has on its front end an angularly arranged front pair of cutting edges (21) and an angularly arranged rear pair of cutting edges (22) for making inner and outer chamfers, said pairs being each symmetric in respect of the longitudinal middle plane (E) and forming an acute angle, and in that the two pairs of cutting edges (21, 22) are relieved with respect to the longitudinal middle plane and starting from the tip end.

## Revendications

1. Outil pour l'usinage de métaux par enlèvement de copeaux, plus particulièrement pour le chanfreinage, la saignée, le surfaçage et le fraisage, consistant en un porte-lames de faible largeur et de lames en carbure rapportées remplaçables, et ayant les caractéristiques suivantes:
a) le porte-lames (1) comprend une alvéole (6) pour les lames rapportées (S), avec des mors de siège supérieurs et inférieurs (7, 8) comportant des surfaces d'appui prismatiques supérieures et inférieures sensiblement parallèles (11, 12) pour la lame rapportée (S), cette dernière ayant des surfaces d'appui complémentaires (33) en face de ces surfaces d'appui (11,12);
b) par l'intermédiaire d'une fente (14) pratiquée dans le porte-lames (1) jusqu'à proximité du bout arrière de l'alvéole (6), l'un des mors de siège (7) est déplaçable en pivotement d'une manière élastique au moyen d'un pont (9) de faible largeur;
c) le mors de siège (7), déplaçable en pivotement d'une manière élastique, est susceptible d'être serré contre la lame rapportée (S);
d) la surface d'appui (12) du mors de siège inférieur (8) comprend une partie en saillie (23) qui s'étend transversalement à travers la surface d'appui et est similaire à un arc dans la direction longitudinale, et la lame rapportée (S) comprend, dans la surface d'appui inférieure (33), un évidement complémentaire (30) en regard de la partie en saillie (23);
**caractérisé** en ce que
e) la partie en saillie (23), similaire à un arc, a une configuration symétrique ou sensiblement symétrique dans la direction longitudinale, et comprend une section centrale (24) de forme arquée ainsi que deux sections droites ou sensiblement droites (25, 26) qui y sont adjacentes, et se trouve dans la région avant, à proximité de l'ouverture de l'alvéole (6) dans le mors de siège inférieur (8), et l'évidement (30) de la lame rapportée (S) a une forme complémentaire, correspondant à la partie en saillie (23), et se trouve dans la région avant de la lame rapportée,
f) la section droite de la surface d'appui prismatique du mors de siège inférieur (8) et de la surface d'appui prismatique (33) de la lame rapportée (S) s'étend, respectivement, au-delà de la partie en saillie (23) et de l'évidement (30), et
g) dans la fente (14) de la lampe rapportée (S), un élément de coin (17, 18) est retenu de manière ajustable, de telle sorte que le mors de siège supérieur (7) est capable d'être pivoté en éloignement du mors de siège inférieur (8) afin de faciliter l'insertion de la lame rapportée dans l'alvéole (6), et d'être déplacé vers la lame rapportée, après l'insertion de cette dernière, dans une position de serrage dans laquelle la partie en saillie (23) s'engage complètement dans l'évidement (30).

2. Outil selon la revendication 1,
**caractérisé** en ce que
sur le côté avant de la partie en saillie (23), la surface d'appui inférieure (12) du mors de siège (8) est prolongée (27) au-delà de la prolongation de la surface d'appui inférieure prismatique (12), et en ce que la surface d'appui inférieure (33) de la lame rapportée (S) est prolongée vers le bas (32), d'une manière correspondante, dans la région avant de l'évidement (30).

3. Outil selon la revendication 1 et 2,
**caractérisé** en ce que
la surface d'appui (27), sur le côté avant de la partie en saillie (23), et la surface d'appui (32), sur le côté avant de l'évidement (30), se terminent en des surfaces inclinées droites.

4. Outil selon la revendication 3,
**caractérisé** en ce que
les surfaces inclinées (27, 32) ont une orientation sensiblement normale par rapport à l'effort de coupe résultant.

5. Outil selon l'une quelconque des revendications 1 à 4,
**caractérisé** en ce que
dans la position ouverte du mors de siège pivotant (7), la distance (a) entre le sommet de la partie en saillie (23) de la surface d'appui inférieure (12) et la surface d'appui supérieure (11) sur l'alvéole (6) est égale ou supérieure à la hauteur (b) de la lame rapportée (S).

6. Lame rapportée pour l'emploi exclusif dans des outils tranchants selon l'une quelconque des revendications 1 à 5, comportant des surfaces d'appui supérieures et inférieures (33), prismatiques, sensiblement parallèles, destinées à la fixation dans l'alvéole (6) d'un porte-lames (1), et ayant un évidement (30), similaire à un arc longitudinal, s'étendant transversalement à travers la surface d'appui dans la région avant de la surface d'appui inférieure (33) et destiné à s'engager dans une partie en saillie appariée (23) dans la surface d'appui inférieure (12) de l'alvéole du porte-lames,
**caractérisée** en ce que
a) l'évidement (30), similaire à un arc, de la lame rapportée (S) est, dans la direction longitudinale, symétrique ou sensiblement symétrique complémentaire à la partie en saillie (23), similaire à un arc, de l'alvéole, et comporte une section centrale arquée ainsi que deux flancs droits ou sensiblement droits, y adjacents, disposés mutuellement pour former un toit, destinés à s'appliquer contre les deux flancs (25, 26) de la section centrale (24) de la partie en saillie (23), et
b) la section droite de la surface d'appui prismatique inférieure (33) s'étend au-delà de l'évidement (30).

7. Lame rapportée selon la revendication 6,
**caractérisée** en ce que
sur le côté avant de l'évidement (30), la surface d'appui inférieure (32) est prolongée vers le bas au-delà de la prolongation de la surface d'appui prismatique inférieure (33).

8. Lame rapportée selon l'une quelconque des revendications 6 et 7,
**caractérisée** en ce que
la surface d'appui inférieure prolongée (32) se termine, sur le côté avant de l'évidement (30), en une surface inclinée droite.

9. Lame rapportée selon la revendication 8,
**caractérisée** en ce que
la surface inclinée (32) est disposée sensiblement normalement à l'effort de coupe résultant.

10. Lame rapportée selon la revendication 6, destinée à réaliser un chanfrein intérieur ou extérieur sur les bords extrêmes de tubes,
**caractérisée** en ce que
la lame comporte sur son bout avant une paire avant d'arètes tranchantes (21), formant les côtés d'un angle, et une paire arrière d'arètes tranchantes (22), formant les côtés d'un angle, destinées à réaliser des chanfreins intérieurs et extérieurs, chacune de ces paires étant disposée de façon symétrique par rapport au plan médian longitudinal (E) et formant un angle aigu, et en ce que les deux paires d'arètes tranchantes (21, 22) sont détalonnées par rapport au plan médian longitudinal, en partant de la pointe.
